(19) Europäisches Patentamt
European Patent Office
Office européen des brevets

(11) **EP 2 556 198 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **11723866.7**

(22) Anmeldetag: **06.04.2011**

(51) Int Cl.:
*E04B 1/62* $^{(2006.01)}$          *E04B 1/66* $^{(2006.01)}$

(86) Internationale Anmeldenummer:
**PCT/EP2011/001706**

(87) Internationale Veröffentlichungsnummer:
**WO 2011/124367 (13.10.2011 Gazette 2011/41)**

(54) **DIFFUSIONSOFFENE BAHN, VORZUGSWEISE ZUR VERWENDUNG IM BAUBEREICH**

PERMEABLE SHEET, PREFERABLY FOR USE IN THE BUILDING SECTOR

BANDE PERMEABLE, DE PRÉFÉRENCE À UTILISER DANS LE SECTEUR DE LA CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2010 DE 102010018810**
**07.04.2010 DE 102010014124**

(43) Veröffentlichungstag der Anmeldung:
**13.02.2013 Patentblatt 2013/07**

(60) Teilanmeldung:
**15000803.5 / 2 902 558**

(73) Patentinhaber: **Ewald Dörken AG**
**58313 Herdecke (DE)**

(72) Erfinder:
• **SCHRÖER, Jörn**
**58313 Herdecke (DE)**

• **FLAIG, Ronald**
**51373 Leverkusen (DE)**

(74) Vertreter: **Von Rohr Patentanwälte Partnerschaft mbB**
**Rüttenscheider Straße 62**
**45130 Essen (DE)**

(56) Entgegenhaltungen:
| | |
|---|---|
| EP-A2- 0 183 266 | EP-A2- 1 624 120 |
| WO-A2-2005/112691 | DE-A1- 3 000 238 |
| DE-A1-102008 030 189 | DE-C1- 3 524 580 |
| FR-A1- 2 934 350 | GB-A- 2 341 578 |
| US-A- 4 714 651 | US-A1- 2007 042 150 |
| US-A1- 2007 282 059 | US-A1- 2009 084 047 |

**Beschreibung**

Die vorliegende Erfindung betrifft eine Bahn, insbesondere zur Verwendung im Baubereich, mit einem flächigen Bahnkörper gemäß dem Oberbegriff von Anspruch 1.

Bahnenware und Folienprodukte müssen in verschiedensten Anwendungen an Untergründen befestigt werden. Im Baubereich betrifft dies z. B. Bahnen, die für die Abdichtung (Luft- und Wasserdichtigkeit) der Gebäudehülle eingesetzt werden (z. B. Dichtungsbahnen, Fassadenbahnen, Luft- und Dampfsperren, Unterdeckbahnen). Befindet sich Holz oder Holzwerkstoff im Untergrund, wird in der Regel mechanisch befestigt, z. B. durch Tackern, Nageln, Schrauben und/oder Anschießen. Die letzten drei Methoden finden auch bei Untergründen aus Gipskarton, Beton, Putz und Stein Anwendung. Dabei werden die Bahnen derart perforiert, dass die Dichtfunktion an der Perforationsstelle nicht mehr erhalten bleibt.

Heute wird die Dichtfunktion aufwändig und manuell durch nachträgliches Abdichten mittels Dichtmassen, Dichtbändern oder Klebebändern wiederhergestellt. Einen Sonderfall stellt die Abdichtung der Durchnagelungen von Konterlatten dar. Dies wird durch zwischengelegte Schaumbänder (Nageldichtbänder) erreicht.

Die vorgenannten, bekannten Methoden stellen einen erheblichen Zusatzaufwand dar und bergen zudem die Gefahr, dass nicht erkannte Perforationen und Beschädigungen weiterhin Undichtigkeiten verursachen.

Aus der FR 2 934 350 A1 geht eine diffusionsoffene Bahn mit einer Schutzschicht hervor, wobei darüber hinaus eine Membranschicht und eine geschäumte Schicht vorgesehen ist.

Eine Bahn ist zur Anwendung im Baubereich aus der EP 0 183 266 A2 bekannt.

Aufgabe der vorliegenden Erfindung ist es daher, die Nachteile des Standes der Technik zu vermeiden.

Zur Lösung ist bei der vorliegenden Erfindung vorgesehen, dass der Bahnkörper wenigstens eine elastische Schicht als Dichtschicht aufweist. Dabei hat das Material der Schicht eine solche Elastizität und Rückstellkraft aufweist, dass beim Durchstoßen der elastischen Schicht mit einem Befestigungsmittel das das Befestigungsmittel umgebende Material der elastischen Schicht das Befestigungsmittel umschließt und im Bereich des Befestigungsmittels abdichtet.

Bei einer nicht erfindungsgemäßen Ausführungsform ist vorgesehen, dass im Bahnkörper ein Material enthalten ist, das im Falle einer Perforation des Bahnkörpers aus dem Bahnkörper zum Verschluss und/oder zur Abdichtung der Perforationsöffnung selbsttätig austritt und/oder aufquillt.

Letztlich handelt es sich bei der vorliegenden Erfindung um eine selbstdichtende bzw. -heilende Bahn, die Perforationen bzw. Perforationsöffnungen selbsttätig wieder verschließt. Dabei sind mit dem Ausdruck "Perforationen" Öffnungen jeglicher Art, die sich beim Befestigen der Bahn am Untergrund oder aber durch Beschädigungen ergeben, gemeint. Dies schließt Perforationsöffnungen, die sich beim Befestigen ergeben, ebenso ein, wie unbeabsichtigte Risse oder andere Beschädigungen der Bahn.

Im Übrigen betrifft die vorliegende Erfindung grundsätzlich Bahnenware jeglicher Art sowie Folienprodukte, wobei der Bahnkörper aus Kunststoff besteht.

Der Grundgedanke der Erfindung besteht darin, dass die Elastizität und die Rückstelleigenschaften des Materials der wenigstens einen elastischen Schicht des Bahnkörpers ausgenutzt wird, um entweder kleine Beschädigungen des Bahnkörpers selbst zu beseitigen bzw. zu verschließen oder aber an dem die Bahn durchdringenden Befestigungsmittel durch eine entsprechende elastische Anlage selbst abzudichten.

Bei der anderen nicht erfindungsgemäßen Ausführungsform besteht die Lösung darin, dass im Bahnkörper der Bahn ein Verschluss- bzw. Abdichtmaterial enthalten ist, das im unperforierten Zustand der Bahn im Bahnkörper verbleibt und nicht aktiv ist. Bei Perforation/Beschädigung des Bahnkörpers - und insbesondere bei Zutritt von Wasser und/oder Luft - ergibt sich eine selbsttätige Aktivität des Materials, das an der Perforationsstelle aus dem Bahnkörper austritt, d.h. herausläuft und/oder herausquillt, und anschließend zum Verschluss der Perforationsöffnung beiträgt und diese im besten Fall vollständig verschließt.

Bei allen Alternativen kann mit Perforationsöffnung eine vollständige Öffnung oder auch eine ringförmige Öffnung gemeint sein, wenn sich in der Perforation beispielsweise ein Nagel o. dgl. Befestigungsmittel befindet.

Der Effekt kann durch verschiedene Prinzipien erreicht werden:

1. Nicht erfindungsgemäße Verwendung von Kleber enthaltenden Mikrokapseln in der Bahn.
Beim Eindringen eines Befestigungsmittels in die Bahn werden die Kapseln zerstört, der Kleber tritt aus und dichtet die Stelle ab. Hierbei sind verschiedene Alternativen möglich:

   a) Die Mikrokapseln enthalten einen Einkomponenten-Klebstoff. Dieser härtet physikalisch oder chemisch aus. Vorzugsweise sind Reaktionspartner bei der chemischen Aushärtung (eindringendes) Wasser, Sauerstoff und/oder reaktive Gruppen des umgebenden Matrixmaterials.

   b) Die Mikrokapseln enthalten einen Zweikomponenten-Klebstoff. Die Reaktionspartner reagieren erst nach Freisetzung miteinander.

c) Der Inhalt der Mikrokapseln reagiert mit dem Material (z. B. Stahl) des Befestigungsmittels (z. B. Nagel) und bildet eine dichtende Masse.

d) Zwei verschiedene Typen Mikrokapseln werden eingesetzt, die unterschiedliche Reaktionspartner (z. B. Harz und Härter) enthalten. Beim Einbringen der Befestigungsmittel werden beide Sorten Kapseln zerstört, die Reaktionspartner treten aus, reagieren miteinander und dichten ab.

e) Verwendung geteilter Mikrokapseln, z. B. Kern mit erstem Material (Harz) und Schale mit zweitem Material (Härter).

2. Nicht erfindungsgemäße Verwendung von fließenden Dichtmitteln in Mikrokapseln.
Beim Einbringen der Befestigungsmittel werden die Kapseln zerstört, das Dichtmittel fließt aus und dichtet die Stelle ab. Je nach Dichtmittel können sich folgende Vorgänge ergeben:

a) Das Lösungsmittel verdunstet, die Dichtmasse wird hart.

b) Es liegt eine Dispersion vor, wobei die Flüssigkeit verdunstet. Es ergibt sich dann ein Viskositätsanstieg der Dichtmasse.

c) Es liegt ein gequollener und somit leicht fließfähiger Kautschuk vor. Das Quellmittel verdunstet oder wird vom Unterspannbahnmaterial aufgenommen und abgeleitet.

3. Nicht erfindungsgemäßes quellendes Material in den Mikrokapseln.
Bei Wasserzutritt quillt das aus den Kapseln austretende Material auf und dichtet ab. Dabei verengt sich der Durchmesser der ursprünglichen Perforationsöffnung, im besten Falle bis zum vollständigen Verschluss.

4. Einbau wenigstens einer nicht erfindungsgemäßen fließenden (Zwischen)-Schicht.
Bei Perforation/Beschädigung der Bahn tritt das fließende Harz aus der innenliegenden Zwischenschicht aus bzw. fließt an der entsprechenden Stelle zusammen und dichtet ab.

5. Einbau wenigstens einer nicht erfindungsgemäßen quellenden (Zwischen)-Schicht.
Bei Perforation/Beschädigung der Bahn tritt Wasser ein und führt zum Quellen der innenliegenden Zwischenschicht und damit zum Abdichten. Dabei ergibt sich der gleiche Effekt wie bei Alternative 3.

6. Erfindungsgemäße Verwendung einer elastischen Schicht als Dichtschicht.
Beim Einbringen eines Befestigungsmittels (z.B. Nagel) umschließt eine Schicht aus einem elastischen Schichtmaterial das Befestigungsmittel, drückt radial gegen dieses und dichtet im Bereich des Befestigungsmittels ab. In Verbindung mit der elastischen Schicht als Dichtschicht bestehen unter anderem folgende Möglichkeiten:

a) Die Bahn besteht aus einem Mehrlagenverbund aus einzelnen Funktionsschichten. Die Dichtschicht besteht dabei bevorzugt aus einem Elastomer. Hierbei kommen sowohl konventionelle als auch thermoplastische Elastomere als Schichtmaterial in Frage. Elastomere ändern unter Dehnung oder Druck kurzzeitig ihre Form und kehren nach Beanspruchung wieder in ihre ursprüngliche Form zurück. Dieser Effekt wird zu einer permanenten Abdichtung zwischen der Dichtschicht und dem Perforationsmedium genutzt.

b) Die erfindungsgemäße Bahn weist als Dichtschicht wenigstens eine Schicht aus einem geschlossenzelligen elastischen Schaum auf. Auch hierbei wird die Rückstellkraft des elastischen Materials genutzt. Hierbei ist es sogar möglich, mehrere Funktionsschichten in nur einer einzigen Schicht zu vereinigen.

c) Als Dichtschicht wird eine nicht erfindungsgemäße Schicht aus einem viskoelastischen Gel verwendet.

Hinzuweisen ist zunächst darauf, dass die vorgenannten Alternativen jeweils für sich aber auch in beliebiger Kombination miteinander eingesetzt werden können. So können beispielsweise Mikrokapseln gemäß Alternative 1 in Verbindung mit einer fließenden Zwischenschicht gemäß Alternative 4 und/oder einer ergänzenden elastischen Schicht gemäß Alternative 6 vorgesehen sein. Dies stellt jedoch nur ein Beispiel der möglichen Schichtaufbauten dar.
Im Zusammenhang mit der unter 6a) genannten Alternative einer elastischen Schicht als Dichtschicht kommen den nachfolgend angegebenen Merkmalen für sich oder in beliebiger Kombination erfinderische Bedeutung zu:

- Es ist ein Mehrlagenverbund aus der Dichtschicht und wenigstens einer weiteren Schicht, insbesondere aus wenigstens einer Membran und/oder wenigstens einer mechanischen Schutzschicht vorgesehen.

- Die Membran hat die Funktion einer wasserdampfdurchlässigen Folie oder Schaumfolie besteht bevorzugt aus thermoplastischen Elastomeren, wie TPE-U oder TPE-E, thermoplastischen Polymeren, wie z. B. PP, Cellophan (Cellglas) oder einer wasserdampfdurchlässigen Beschichtung z. B. auf Polyurethan- oder Acrylat-Basis oder einer sonstigen wasserdampfdurchlässigen Schicht anderer Art.

- Die Schichtdicke der Membran liegt zwischen 10 $\mu m$ und 1000 $\mu m$, wobei jeder Einzelwert und jedes Zwischenintervall grundsätzlich möglich ist, auch wenn dies im Einzelnen nicht erwähnt ist.

- Der Schichtenverbund, das heißt die Bahn als solche, gewährleistet eine Wasserdichtigkeit und ist derart ausgebildet, das sie einem hydrostatischen Wasserdruck von größer 100 mm, bevorzugt größer 200 mm, weiter bevorzugt größer 1000 mm und noch weiter bevorzugt größer 1500 mm Stand hält. Auch hierbei ist jeder Einzelwert innerhalb des genannten Intervalls möglich.

- Die Dichtschicht hat die Funktion einer Abdichtung zum Perforationsmedium, bei dem es sich beispielsweise um einen Nagel handelt.

- Die Dichtschicht besteht bevorzugt aus elastischen Materialien, wie Folien, Schäumen, Vliesen, Gewirken oder Geweben.

- Als Material der Dichtschicht kommen insbesondere konventionelle und thermoplastische Elastomere zum Einsatz.

Zu den konventionellen Elastomeren zählen alle irreversibel chemisch vernetzten Arten von synthetischem und natürlichem Kautschuk. Die Vernetzung erfolgt beispielsweise durch Vulkanisation mit Schwefel, mittels Peroxiden oder Metalloxiden. Beispiele für konventionelle Elastomere sind Naturkautschuk (NR), Acrylnitril-Butadien-Kautschuk (NBR), StyrolButadien-Kautschuk (SBR), Chloropren-Kautschuk (CR), Butadien-Kautschuk (BR) und Ethylen-Propylen-Dien-Kautschuk (EPDM).

Als thermoplastische Elastomere (TPE) bezeichnet man reversibel physikalisch vernetzte Elastomere. Sie zeigen bei Raumtemperatur ähnliches Verhalten wie konventionelle Elastomere. Bei erhöhten Temperaturen hebt sich die physikalische Vernetzung auf, so dass diese Elastomere ein typisches Verarbeitungsverhalten von Thermoplasten zeigen. Zu den thermoplastischen Elastomeren zählen Elastomerlegierungen/Polymerblends aufweisend Polyolefine und unvernetzte oder teilvernetzte Kautschukarten (TPE-V, TPE-O) als auch Multiblockpolymere (TPE-E, TPE-A, TPE-U, TPE-S).

- Als Materialien der Dichtschicht kommen insbesondere thermoplastische Polymere, wie PE, PP, PET, EVA, PA in vernetzter oder unvernetzter Form, thermoplastische Elastomere (TPE) wie z. B. TPE-U, TPE-S, TPE-A, TPE-O oder TPE-E, Elastomere, wie EPDM oder Naturkautschuk, zum Einsatz.

- Das Flächengewicht der Dichtschicht liegt zwischen 10 und 3000 g/m$^2$, bevorzugt zwischen 50 und 500 g/m$^2$, wobei jeder Einzelwert und jedes Zwischenintervall innerhalb der genannten Bereichsgrenzen möglich ist.

- Die Schichtdicke der Dichtschicht liegen zwischen 10 $\mu m$ und 3000 $\mu m$, wobei jeder Einzelwert und jedes Zwischenintervall innerhalb der Bereichsgrenzen möglich ist. Die Schichtdicke ist üblicherweise größer 50 $\mu m$ bevorzugt größer 150 $\mu m$ und weiter bevorzugt liegt sie zwischen 250 bis 800 $\mu m$.

- Das Elastizitätsmodul des Materials der Dichtschicht liegt zwischen 0,001 und 20 kN/mm$^2$, bevorzugt zwischen 0,005 und 1kN/mm$^2$, wobei auch hierbei jeder Einzelwert und jedes Zwischenintervall innerhalb der Bereichsgrenzen möglich ist.

- Die Rückstellkraft des Material der Dichtschicht liegt im Bereich zwischen 1 und 2000 N/5cm, bevorzugt zwischen 20 und 500 N/5cm, wobei auch hierbei jeder Einzelwert innerhalb der Bereichsgrenzen möglich ist.

- Die elastomere Schicht kann in Abhängigkeit von Material und Schichtdicke grundsätzlich diffusionsoffen oder diffusionsgeschlossen sein. Thermoplastische Elastomere, wie Vertreter der Elastomertypen TPE-E, TPE-A und TPE-U, erweisen sich bereits in Folien bestimmter Dicke als diffusionsoffen, d.h. sie haben wasserdichten aber wasserdampfdurchlässigen Charakter.

- Bei anderen Elastomertypen, wie den konventionellen Elastomeren und einigen Vertretern der thermoplastischen Elastomere (TPE-O, TPE-V und TPE-S) oder im Falle unzureichender Dampfdiffusion, beispielsweise aufgrund der Schichtdicke, kann die diffusionsoffene Eigenschaft durch eine zusätzliche flächige Perforation sichergestellt werden. Dies kann im Einzelnen durch mechanische oder elektrostatische Perforation, durch Heiß-, Laser- und/oder Wasserstrahlperforation und/oder Stanzung der Folie erfolgen. Die mechanische Perforation bzw. Stanzung erfolgt beispielsweise durch Nadel-, Rollen-, Platten oder Bogenmaterialien und kann somit verschiedene Lochbilder besitzen.

- Die Dichtschicht bzw. das Material der Dichtschicht weist eine Wasserdampfdurchlässigkeit (WDD) zwischen 10 und 10.000 g/m$^2$d auf. Auch hierbei ist jeder Einzelwert und jedes Zwischenintervall innerhalb der Bereichsgrenzen möglich.

- Das Material der Dichtschicht kann von Natur offenporigen Charakter besitzen (intrinsisch) und beispielsweise als Vlies, Gewebe oder Gewirke ausgebildet sein.

- Alternativ kann ein offener Flächenanteil durch Stanzung oder Nadelperforation generiert werden. Der Anteil der offenen Fläche an der Gesamtfläche kann dabei zwischen 2% und 85%, bevorzugt zwischen 10% und 60% liegen. Auch hierbei ist jeder Einzelwert und jedes Zwischenintervall unterhalb der Bereichsgrenzen möglich.

- Entscheidend ist, dass der Lochdurchmesser der Perforation bzw. die Maschenweite des Gewebes/Gewirkes/Vlieses unterhalb des Durchmessers des Perforationsmediums liegt. Der Lochdurchmesser der Perforationen bzw. der Maschenweite sollte zwischen 10 mm und 4 mm, bevorzugt kleiner 2 mm und insbesondere im Bereich von 0,1 bis 2,0 mm sein, wobei auch hier jeder Einzelwert und jedes Zwischenintervall innerhalb der Bereichsgrenzen möglich ist.

- Um einen optimalen Dichtungseffekt zu erzielen, sollte der Durchmesser der Perforationslöcher bevorzugt unter 90% des Durchmessers des Befestigungsmittels liegen, bevorzugt kleiner 75% und weiter bevorzugt im Bereich kleiner 50%.

- Um bei einer elastischen Schicht mit großporiger Perforation die Wasserdichtheit zu garantieren, kann eine zusätzliche Kaschierung/Beschichtung mit einer diffusionsoffenen Schicht erfolgen. Weitere Kaschierungen oder Beschichtungen, beispielsweise mit Vliesschichten, können zur flächigen Formstabilität der Folie beitragen.

- Erfindungsgemäß ist wenigstens eine mechanische Schutzschicht vorgesehen, deren Hauptaufgabe darin besteht, die Membran vor mechanischer Beschädigung, wie z. B. durch Holzsplitter bei Perforation durch Nagelung oder Schraubung zu schützen. Bevorzugt sind zwei Schutzschichten vorgesehen, die außenseitig angeordnet sind und damit auch die elastische Dichtschicht vor einer unnötigen mechanischen Beschädigung geschützt wird.

- Die mechanische Schutzschicht kann aus Vliesen, Geweben, Gewirken, Folien und/oder offenzelligen oder geschlossenzelligen Schaumfolien bestehen.

- Als Materialien für die mechanische Schutzschicht kommen thermoplastische Polymere wie z. B. PE, PP, PET, EVA, PA in vernetzter oder unvernetzter Form, thermoplastische Elastomere, wie z. B. TPE-U, TPE-S, TPE-A, TPE-O oder TPE-E, Elastomere, wie EPDM oder Naturkautschuk, aber auch natürliche oder halbsynthetische Materialien, wie z. B. Baumwolle, Hand, Jute bzw. Viskose zum Einsatz. Auch können Materialien als Blends aus den zuvor genannten Stoffen in Betracht kommen.

- Die Dichte des Materials der Schutzschicht liegt zwischen 1 und 2200 kg/m$^3$, bevorzugt zwischen 5 und 500 kg/m$^3$, wobei jeder Einzelwert und jedes Zwischenintervall innerhalb der Bereichsgrenzen möglich ist.

- Die Schichtdicke der mechanischen Schutzschicht liegt zwischen 30 $\mu$m und 3000 $\mu$m, wobei auch hier jeder Einzelwert und jedes Zwischenintervall innerhalb der Bereichsgrenzen möglich ist.

- Das Flächengewicht der mechanischen Schutzschicht liegt zwischen 10 und 1000 g/m$^2$, bevorzugt zwischen 50 und 500 g/m$^2$, wobei auch hier jeder Einzelwert und jedes Zwischenintervall innerhalb der Bereichsgrenzen möglich ist.

- Es versteht sich, dass die Schutzschicht dann wasserdampfdurchlässig sein muss, wenn die Bahn, also der Verbund, als wasserdampfdurchlässige Unterspannbahn oder Unterdeckbahn eingesetzt wird. In diesem Falle sollte die Wasserdampfdurchlässigkeit (WDD) zwischen 10 und 3000 g/m$^2$d, bevorzugt zwischen 100 bis 1500 g/m$^2$d liegen, wobei jeder Einzelwert und jedes Zwischenintervall innerhalb der Bereichsgrenzen möglich ist.

- Die Verbindung der einzelnen Schichten des Mehrschichtenverbundes, der bevorzugt in der Reihenfolge Schutzschicht - Membran - Dichtschicht - Schutzschicht vorgesehen ist, kann durch Verschweißen, Klebkaschieren, Extrusionsbeschichtung oder Dispersionsbeschichtung erfolgen. Auch sind Kombinationen der Verfahren ohne weiteres möglich. So können benachbarte Schichten zunächst durch ein bestimmtes Verfahren miteinander verbunden und anschließend können weitere Schichten über ein anderes Verfahren mit dem betreffenden Vorlaminat verbunden werden.

- Die Verbindungstechnik der Schichten ist auf den Einsatzzweck abzustimmen. Wird die Bahn als wasserdampfdurchlässiger Verbund eingesetzt, darf die Verbindung der Schichten die Wasserdampfdurchlässigkeit nicht, jedenfalls nicht wesentlich beeinträchtigen. Die Wasserdampfdurchlässigkeit des Mehrlagenverbundes sollte zwischen 10 und 3000 g/m$^2$d, bevorzugt zwischen 100 bis 1500 g/m$^2$d liegen, wobei jeder Einzelwert und jedes Zwischenintervall innerhalb der Bereichsgrenzen möglich ist.

Bei der unter 6b) genannten erfindungsgemäßen Alternative ist die Dichtschicht in Form einer Schaumschicht aus einem geschlossenzelligen elastischen Schaum ausgebildet. Dabei können für sich oder in Kombination folgende Merkmale auch in Verbindung mit weiteren vorgenannten Merkmalen realisiert sein:

- Die Schaumschicht kann Teil eines Mehrschichtenverbundes sein, wie dies zuvor beschrieben worden ist. Hierauf wird ausdrücklich Bezug genommen.

- Grundsätzlich ist es aber auch möglich, dass mehrere Funktionsschichten in der Schaumschicht vereinigt werden können. So kann beispielsweise eine geschäumte TPE-U oder TPE-E-Schicht oder auch andere Schichten gleichzeitig die Funktion der mechanischen Schutzschicht und/oder der Membran und/oder der einen oder auch mehrerer Dichtschichten übernehmen.

- Bei dem Material der Dichtschicht handelt es sich um eine Polymerschaumschicht, die bei Perforation/Beschädigung der Bahn die Abdichtung zum Befestigungs- bzw. Perforationsmittel bildet.

- Der Polymerschaum besteht aus wasserdampfdurchlässigem TPE-U oder TPE-E, die mit chemischen oder physikalischen Treibmitteln bzw. durch Gase, wie Luft, Stickstoff und/oder Kohlendioxid geschäumt werden.

- Die Dichte des Materials der Schaumschicht liegt zwischen 1 und 2200 kg/m$^3$, bevorzugt zwischen 5 und 500 kg/m$^3$, wobei jeder Einzelwert und jedes Zwischenintervall innerhalb der Bereichsgrenzen möglich ist.

- Die Schichtdicke des Materials der Dichtschicht liegt zwischen 30 $\mu$m und 5000 $\mu$m, wobei jeder Einzelwert und jedes Zwischenintervall innerhalb der Bereichsgrenzen möglich ist.

- Das Flächengewicht der Schaumschicht liegt zwischen 10 und 1000 g/m$^2$, bevorzugt zwischen 50 und 500 g/m$^2$, wobei jeder Einzelwert und jedes Zwischenintervall innerhalb der Bereichsgrenzen möglich ist.

- Die Wasserdampfdurchlässigkeit (WDD) liegt zwischen 10 und 3000 g/m$^2$d, bevorzugt zwischen 100 und 1500 g/m$^2$d, wobei jeder Einzelwert innerhalb der Bereichsgrenzen möglich ist.

- Das Elastizitätsmodul des Materials der Dichtschicht liegt zwischen 0,01 und 20 kN/mm$^2$, bevorzugt zwischen 0,05 und 1 kN/mm$^2$, wobei auch hier jeder Einzelwert und jedes Zwischenintervall innerhalb der Bereichsgrenzen möglich ist.

- Auch bei Realisierung einer geschäumten Elastomerschicht ist im Übrigen eine Perforation wie zuvor erwähnt möglich. Hierbei sollte der Zellen- oder Porendurchmesser des Schaummaterials kleiner sein als der zu erwartende Lochdurchmesser durch das Befestigungsmittel. Alternativ kann offenporiger Elastomerenschaum eingesetzt und somit auf eine zusätzliche Perforation verzichtet werden.

Bei der unter 6c) genannten nicht erfindungsgemäßen Ausführungsform ist die Verwendung eines viskoelastischen Gels als elastische Schicht bzw. Dichtschicht vorgesehen. Bei einer Perforation oder Beschädigung der Bahn wird das flexible und hoch-elastische Gel in die Fläche verdrängt. Im Gegensatz zu rein viskosen Medien, wie bei der Ausführungsform gemäß Ziffer 2 beschrieben, oder einer rein elastischen Schicht, das heißt der Verwendung eines idealen Elastomers, decken viskoelastische Materialien den Übergangsbereich ab, in dem die Eigenschaften beider Materialien zur Geltung machen.

Wenngleich es sich bei einer Zwischenschicht aus einer viskoelastischen Gel nicht um ein ideales Elastomer handelt, wird dies dennoch unter den Begriff "elastische Schicht" subsumiert.

Aufgrund ihrer Formstabilität haben viskoelastische Materialien, wie Gele, das Bestreben, wieder in die Ausgangsform zurückzukehren und sorgen im Vergleich zu reinen Elastomeren somit für eine zusätzliche fließende Abdichtung zum Befestigungs- bzw. Perforationsmittel. Auf diese Weise hat das viskoelastische Gel selbstklebende Eigenschaften und sorgt damit für einen weiteren Verbund zum Befestigungs-/Perforationsmittel.

In Verbindung mit der Verwendung einer Dichtschicht aus einem viskoelastischen Material können nachfolgende Merkmale für sich oder in beliebiger Kombination auch mit den vorgenannten Merkmalen der anderen Alternativen miteinander verwendet werden:

- Grundsätzlich kann die Dichtschicht aus einem viskoelastischen Gel in einem Mehrlagenverbund entsprechend der Alternativ 6a) integriert sein, wobei die Schicht aus dem elastischen Material als solchem dann durch die Gelschicht ersetzt wird. Auf die zuvor beschriebenen und angegebenen Merkmale wird insoweit ausdrücklich Bezug genommen.

- Als viskoelastisches Gel für die Dichtschicht können 2- oder 1-Komponenten Polyurethan-Systeme, Silikongele oder PMMA-basierte Gele eingesetzt werden.

- Statt des vorgenannten Schichtenverbundes kann die viskoelastische Zwischenschicht auch mit einer oder mehreren (Träger-)Schichten kombiniert werden, um die Stabilität zu erhöhen.

- Bei den Trägerschichten kann es sich um Folien, Vliesen, Gewebe, Gewirke aus Materialien, wie thermoplastischen Polymeren, z. B. PE, PP, PES, EVA oder dergleichen handeln.

- Der Auftrag des Gelfilms auf einen Träger kann z. B. durch Sprühen, Rakeln oder Walzen erfolgen.

- Der Härtegrad des viskoelastischen Gels liegt im Bereich von Shore A 15 bis Shore A 30, wobei jeder Einzelwert und jedes Zwischenintervall innerhalb der Bereichsgrenzen möglich ist.

- Das Auftragsgewicht an viskoelastischem Gel in der Dichtschicht liegt zwischen 50 und 1000 g/m², vorzugsweise im Bereich zwischen 100 und 400 g/m², wobei jeder Einzelwert und jedes Zwischenintervall innerhalb der Intervallgrenzen möglich ist.

- Zur Gewichtsreduktion der Gelschicht können Füllstoffe, deren Gewicht geringer ist als das des Gels, wie z. B. Mikrohohlkugeln verwendet werden, oder es kann die Beladung mit Luft oder anderen Gasen erfolgen.

- Die Wasserdampfdurchlässigkeit der Gelschicht liegt dann, wenn der Schichtenverbund insgesamt wasserdampfdurchlässig sein soll, zwischen 10 und 3000 g/m²d, bevorzugt zwischen 100 und 1500 g/m²d, wobei jeder Einzelwert und jedes Zwischenintervall innerhalb der Bereichsgrenzen möglich ist.

- Grundsätzlich kann der Selbstklebecharakter des Gels auch zur Verklebung der Folienbahnen untereinander genutzt werden. So kann im Bereich des Randes der Bahn oberhalb der Gelschicht die äußere Schutz-/ Trägerschicht längsrandseitig verkürzt sein, so dass sich ein längslaufender äußerer Randstreifen der Gelschicht ergibt, der bevorzugt mittels einer Schutzfolie, beispielsweise in Form einer Polyurethan-Folie oder eines Polyurethan-Lacksystems abgedeckt ist. Zum Verlegen wird der Schutzfilm abgezogen, so dass sich randseitig die selbstklebender Oberfläche ergibt, über die sich daran anschließende Bahn verklebt werden kann.

In diesem Zusammenhang ist es grundsätzlich möglich, am gegenüberliegenden Längsrand, auf der gleichen oder der anderen Seite der Bahn eine entsprechende Ausbildung vorzusehen, bei der randseitig die Gelschicht bis auf die Schutzfolie ebenfalls freiliegt.

Bei allen Ausführungsformen der Alternative gemäß Ziffer 6 ist bevorzugt folgendes für sich oder in Kombination miteinander oder weiteren der vorgenannten Merkmale vorgesehen:

- Die Kenngröße für das Maß der Abdichtung (MDA) der Dichtschicht aus dem Produkt der Rückstellkraft $F_r$ [N/5cm] und der Dicke der Dichtschicht d [$\mu$m] berechnet nach der Formel

$$MDA = F_r \times D$$

liegt zwischen 3 N/5cm x $\mu$m und 10000 kN/5cm x $\mu$m und bevorzugt zwischen 10 N/5cm x $\mu$m und 5000 kN/5cm x $\mu$m und insbesondere zwischen 50 N/5cm x $\mu$m bis 2000 N/5cm x $\mu$m liegt, wobei jeder Einzelwert innerhalb des genannten Wertebereichs möglich ist.

- Bevorzugt sollte die Rückstellkraft der Dichtschicht im Bereich zwischen 0,1 und 2000 N/5cm, bevorzugt zwischen 20 und 500 N/5cm liegen, wobei jeder Einzelwert und jedes Zwischenintervall innerhalb der Bereichsgrenzen möglich ist.

Hinzuweisen ist weiterhin darauf, dass es insbesondere bei den Alternativen 1. bis 3. auch möglich ist, statt Mikrokapseln entsprechende ungekapselte Materialpartikel zu verwenden. Hierbei sollte dann vorgesehen sein, dass diese Partikel in die Matrix des Bahnkörpers eingebettet, also außenseitig nicht frei zugänglich sind. Eine Zugänglichkeit und damit die Möglichkeit einer Reaktion ergibt sich erst im Falle einer Perforation. In diesem Falle kann dann als Reaktionspartner Luft oder Wasser dienen. Von daher ist es auch wesentlich, dass die Mikropartikel, die bevorzugt aus einem festen Material bestehen, im nicht-perforierten Zustand der Bahn in die Bahnmatrix vollständig eingebunden und außenseitig nicht zugänglich sind.

Im Zusammenhang mit den Schichten gemäß den Alternativen 4. und 5. ist darauf hinzuweisen, dass es grundsätzlich möglich ist, entsprechend der Ausbildung der Mikrokapseln mit unterschiedlichen Reaktionspartnern zwei innenliegende Reaktionsschichten vorzusehen, die dann über eine Trennschicht voneinander getrennt sind. Im Falle einer Perforation oder Beschädigung der Bahn gelangen die Reaktionspartner der einzelnen Schichten, die zuvor über die Trennschicht getrennt worden sind, miteinander in Verbindung, so dass die zuvor beschriebene Reaktion ergeben kann.

Im Übrigen versteht es sich, dass die zuvor beschriebenen dichtenden Funktionsschichten, unabhängig davon, ob sie als Zwischenschicht ausgebildet sind oder Mikrokapseln oder Mikropartikel enthalten, mit beliebigen anderen Schichten kombiniert werden können. Der Bahnkörper kann also ohne weiteres aus einem mehrschichtigen Material aufgebaut sein.

Als chemische Basis mikroverkapselter Klebstoffe (Kernmaterialien) kommen beispielsweise Acrylate, Polyester, Epoxidharze, oder Polyurethane in Betracht.

Durch die gezielte Auswahl des Wandmaterials, des Kernmaterials und des Verfahrens zur Mikroverkapselung können die angestrebten Eigenschaften der Mikrokapseln, wie Kapseldurchmesser und Wandstärke, beeinflusst werden. Wandmaterial und Wandstärke sind wichtige Kenngrößen für die mechanische, thermische und chemische Stabilität. Sie bestimmen weiterhin, ob das Kernmaterial kontinuierlich oder vorzugsweise schlagartig freigesetzt wird und entscheiden über die Lagerstabilität des Materials.

So können je nach angewendeter Verkapselungstechnik Kapseldurchmesser zwischen 0,1 und 300 $\mu$m, bevorzugt zwischen 1 bis 100 $\mu$m und insbesondere zwischen 10 und 50 $\mu$m eingesetzt werden. Prinzipiell stehen typische Wandmaterialien, wie z.B. Aminoharze, Polyamide, Polyurethane, Polyharnstoffe, Polyacrylnitril oder Gelatine, zur Verfügung.

Die zur Bahnenherstellung angewendeten Verfahren, wie Extrusion, Gießverfahren, Beschichtung oder Faserspinnen, müssen auf die Größe und Stabilität der Mikrokapseln bzw. -partikel abgestimmt sein, so dass eine vorzeitige Freisetzung des Kernmaterials durch übermäßige mechanische, thermische oder chemische Beanspruchung im Bahnenherstellungsprozess vermieden wird. Weiterhin ist zu berücksichtigen, dass die Konzentration der Kapseln (durchschnittliche Anzahl der Kapseln pro Flächeneinheit) so gewählt wird, dass im Fall von diffusionsoffenen Bahnen die Diffusionsfähigkeit der Bahn in der erforderlichen Größenordnung erhalten bleibt.

Eine Alterung der Bahn, unter den der Anwendung entsprechenden Bedingungen, darf nicht zur Beschädigung des Wandmaterials der Kapseln und somit zu einer flächigen Verteilung des Klebstoffes und zu einer damit verbundenen generellen Beeinträchtigung der Diffusionsfähigkeit der Bahn führen.

Die lokale Zerstörung der Kapseln bzw. die Erzielung der Zugänglichkeit der eingebetteten Partikel oder Schichten sollte erst durch relativ hohen mechanischen Druck, beispielsweise durch Perforation und Beschädigung aufgrund von Durchnagelung erfolgen.

Der aus den beschädigten Kapseln freiwerdende Klebstoff stellt nach dem Aushärtungsprozess einen wasserundurchlässigen Verbund mit dem Perforationsmedium her.

Als quellfähige Materialien werden bevorzugt Polymere der Acrylsäuren/Acrylsalze (Superabsorber) und/oder Bentonite eingesetzt. Es eignen sich aber auch Polyurethane, Polyetherester, Polyetherblockamide, Polyacrylsäureester, Ionomere und/oder Polyamide mit entsprechender Wasseraufnahme.

Die Wasseraufnahme der quellfähigen Materialien bei 23°C in Wasser liegt bei Einsatz von Superabsorbern und Bentoniten zwischen dem 10-1000-fachen. Die Wasseraufnahme bei anderen Polymeren, insbesondere bei Zwischenschichten liegt zwischen 1 und 30 %, bevorzugt zwischen 3 und 15 % und weiter bevorzugt zwischen 5 und 10 %.

In einem besonderen Fall werden die Mikrokapseln in ein Polymer (Homo- oder Copolymere des Polyethylens, Polypropylens oder Polyesters) eingearbeitet, diese Mischung extrudiert und anschließend verstreckt. Dabei entsteht eine mikroporöse diffusionsoffene Membran (Breathable Film) mit selbstdichtenden Eigenschaften. Ein Teil der Mikrokapseln kann durch herkömmliche Füllstoffe wie Kreide, Talkum, Marmor, Kalkstein, Titandioxid oder Quarzmehl ersetzt werden.

Die Flächengewichte der dichtenden Funktionsschichten bzw. der Mikrokapseln/Partikel bei zumindest im Wesentlichen gleichmäßiger Verteilung über die Fläche der Bahn liegen oder im diffusionsoffenen Fall zwischen 5 bis 150 g/m², bevorzugt 10 bis 100 g/m² und weiter 20 bis 80 g/m². Das jeweilige Flächengewicht kann dabei vom jeweiligen Einsatzfall im besonderen Maße abhängen. Demgegenüber liegt das Gesamtflächengewicht, d. h. das Gewicht des Matrixmaterials des Bahnkörpers einschließlich des Flächengewichts der dichtenden Funktionsschicht/Mikrokapseln/Partikel, im diffusionsgeschlossenen Fall zwischen 30 bis 1000 g/m², bevorzugt 50 bis 500 g/m² und weiter 100 bis 300 g/m².

Die Konzentration der Kapseln/Partikel liegt zwischen 5 bis 70 %, bevorzugt 10 bis 50 % und weiter 20 bis 30 %. Die vorgenannten Prozentangaben können sich insbesondere auf den Rauminhalt (Vol.-%) als auch auf den Gewichtsanteil (Gew.-%) beziehen.

Die erfindungsgemäße Bahn kann sowohl diffusionsoffen als auch diffusionsgeschlossen sein. Bei diffusionsoffenen Bahnen liegt der sd-Wert im Bereich zwischen 0,01 bis 0,5 m, bevorzugt zwischen 0,01 bis 0,3 m und weiter 0,02 bis 0,15 m. In der diffusionsgeschlossenen Ausführung liegt der sd-Wert zwischen 0,5 bis 1000 m, bevorzugt zwischen 2 bis 200 m.

Im Zusammenhang mit der vorliegenden Erfindung ist im Übrigen festgestellt worden, dass die Wasserdichtigkeit der erfindungsgemäßen Bahn nach Perforation mit einem Nagel oder einer Schraube derart ist, dass eine Dichtigkeit bei einer statischen Wassersäule > 200 mm, bevorzugt > 500 mm, besonders bevorzugt > 1000 mm und weiter bevorzugt > 1500 mm gegeben ist. Je nach Art und Menge des Funktionsmaterials ist das Verhältnis der Wasserdichtheit der erfindungsgemäßen Bahn nach Perforation zur unverletzten Bahn > 50 %, bevorzugt > 70 % und weiter bevorzugt > 90 %. Letztlich kann durch die Erfindung fast eine Wasserdichtigkeit wie bei einer unverletzten Bahn gewährleistet werden.

Anwendung finden die so ausgerüsteten Bahnen oder Bänder aller Alternativen vorzugsweise in der Gebäudeabdichtung, insbesondere in der diffusionsoffenen Variante als Unterdeckbahn oder als Fassadenbahn.

Die diffusionsgeschlossenen Bahnen werden als Dampfbremsen, Dampfsperren, Gassperren (z.B. gegen Radon, Methan), Mauerwerkssperren sowie Vertikal-(Wände) und Horizontalabdichtungen (Böden, Flachdächer) eingesetzt.

Es wird ausdrücklich darauf hingewiesen, dass alle vorstehenden und in den Ansprüchen angegeben Bereichsangaben alle Einzelwerte und alle Zwischenbereiche innerhalb der beanspruchten Bereichsgrenzen umfassen, auch wenn diese im Einzelnen nicht angegeben sind. Alle nicht genannten Einzelwerte und Zwischenbereiche werden als erfindungswesentlich angesehen.

Nachfolgend werden Ausführungsbeispiele der Erfindung beschrieben. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt

Fig. 1     eine schematische Darstellung einer ersten Ausführungsform einer nicht erfindungsgemäßen Bahn,

Fig. 2     eine schematische Ansicht einer zweiten Ausführungsform einer nicht erfindungsgemäßen Bahn,

Fig. 3     eine schematische Darstellung einer Mikrokapsel,

Fig. 4     eine schematische Darstellung einer dritten Ausführungsform einer nicht erfindungsgemäßen Bahn,

Fig. 5     eine schematische Darstellung einer vierten Ausführungsform einer nicht erfindungsgemäßen Bahn,

Fig. 6     eine schematische Darstellung einer fünften Ausführungsform einer nicht erfindungsgemäßen Bahn,

Fig. 7     eine schematische Darstellung einer sechsten Ausführungsform einer nicht erfindungsgemäßen Bahn,

Fig. 8     eine schematische Darstellung der Bahn aus Fig. 1 im perforierten Zustand,

Fig. 9     eine schematische Darstellung der Bahn aus Fig. 1 mit aufgesetzter Konterlatte im perforierten Zustand,

Fig. 10    eine schematische Ansicht der Bahn aus Fig. 6 im perforierten Zustand,

Fig. 11    eine schematische Darstellung einer siebten Ausführungsform einer erfindungsgemäßen Bahn ohne Befestigungsmittel,

Fig. 12    eine schematische Darstellung der Bahn aus Fig. 11 mit Befestigungsmittel,

Fig. 13    eine schematische Seitenansicht einer achten Ausführungsform einer erfindungsgemäßen Bahn,

Fig. 14    eine Draufsicht auf die Bahn aus Fig. 13 unter Weglassung der obersten Schicht,

Fig. 15    eine schematische Querschnittsansicht einer anderen Ausführungsform einer erfindungsgemäßen Bahn und

Fig. 16    eine perspektivische Teilansicht einer weiteren Ausführungsform einer nicht erfindungsgemäßen Bahn.

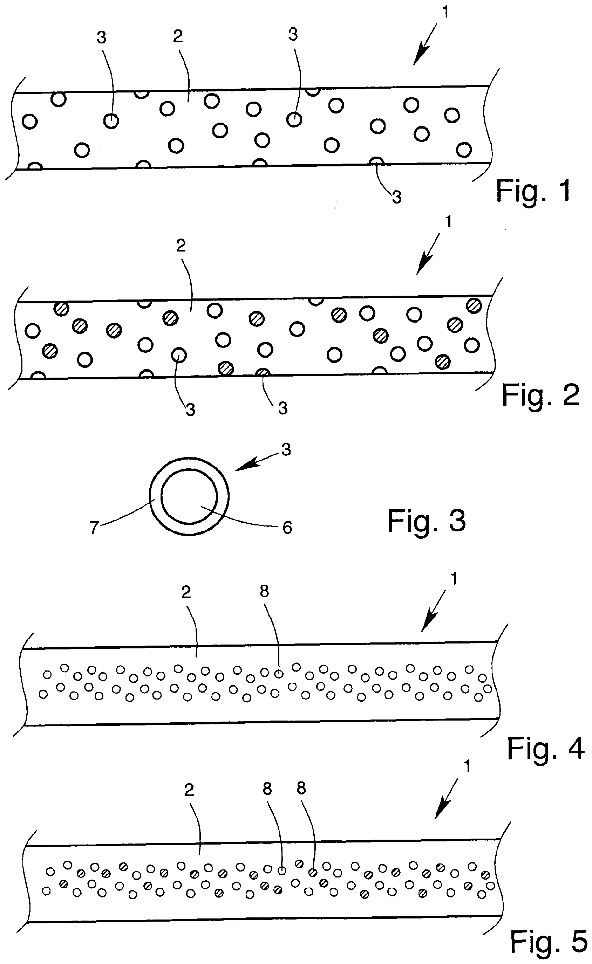

In den Fig. 1 und 2 sowie 4 bis 10 sind jeweils Bahnen 1 dargestellt, die zur Verwendung im Baubereich vorgesehen sind. Bei den Bahnen 1 kann es sich beispielsweise um Dichtungs- oder Fassadenbahnen, Luft- und Dampfsperren handeln. Je nach Verwendungszweck können die Bahnen 1 dabei diffusionsoffen oder diffusionsgeschlossen sein. Dabei fallen unter dem Begriff "Bahn" auch Bänder oder Folienprodukte. In jedem Falle weist die Bahn 1 einen flächigen Bahnkörper 2 auf, der einen extrudierbaren oder gießfähigen Kunststoff als Matrixmaterial aufweist. Üblicherweise weist der Bahnkörper 2 eine langgestreckte Form auf und ist zu Handhabungszwecken im Nicht-Gebrauchszustand aufgewickelt. Dabei ist die Länge des Bahnkörpers 2, die Breite und die Dicke vom Einsatzfall abhängig. Übliche Dicken des Bahnkörpers 2 liegen zwischen 100 und 300 $\mu$m, wobei der Dickenbereich grundsätzlich zwischen 50 $\mu$m und 2.000 $\mu$m variieren kann, wobei an sich jeder Einzelwert zwischen den vorgenannten Bereichsgrenzen möglich ist.

Bei allen Ausführungsformen ist es so, dass im Bahnkörper 2 ein Material enthalten ist, das im Nicht-Gebrauchszustand nicht aktiviert und aktivierbar ist, das jedoch im Falle einer Perforation des Bahnkörpers 2 aus dem Bahnkörper 2 austritt und dabei zum Verschluss bzw. zur Abdichtung der Perforationsöffnung vorgesehen ist.

In den Fig. 1 und 2 sowie 4 bis 7 sind verschiedene Ausführungsformen von Bahnen 1 dargestellt. Bei der Ausführungsform gemäß Fig. 1 befinden sich im Matrixmaterial des Bahnkörpers 2 Mikrokapseln 3, die einen Einkomponenten-Klebstoff enthalten. Bei Perforation des Bahnkörpers 2 durch ein Befestigungsmittel 4, beispielsweise in Form eines Nagels, werden die im Bereich der Perforation befindlichen Mikrokapseln 3 zerstört. Dabei tritt der Klebstoff aus den Kapseln 3 aus. Anschließend kann der Klebstoff physikalisch oder chemisch aushärten. Reaktionspartner können dabei beispielsweise von außen eindringendes Wasser, Sauerstoff und/oder reaktive Gruppen des umgebenden Matrixmaterials sein. Letztlich ergibt sich durch den freiwerdenden Klebstoff im Bereich der Perforationsöffnung zwischen dem Befestigungsmittel 4 und dem Matrixmaterial des Bahnkörpers 2 eine Abdichtung 5, die die ringförmige Perforationsöffnung zwischen dem Befestigungsmittel 4 und dem umgebenden Matrixmaterial des Bahnkörpers 2 abdichtet. Dabei kann im Übrigen auch vorgesehen sein, dass der Klebstoff der Mikrokapseln 3 mit dem Material des Befestigungsmittels 4 reagiert, so dass sich auf diese Weise die Abdichtung 5 ergibt.

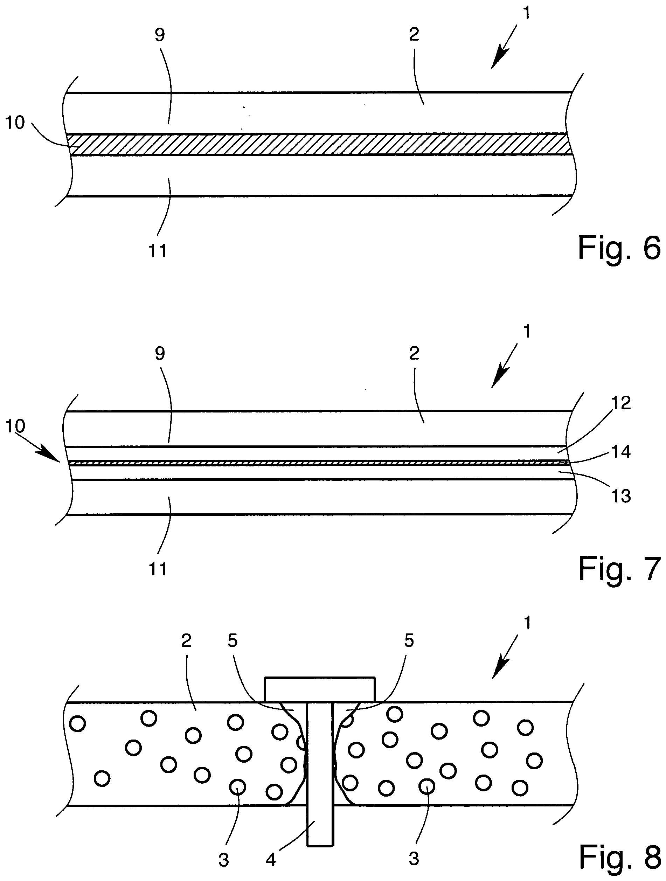

Bei der Ausführungsform gemäß Fig. 2 sind zwei unterschiedliche Typen von Mikrokapseln 3 vorgesehen, die vorliegend hell und dunkel gekennzeichnet sind. Die beiden Typen von Mikrokapseln 3 enthalten unterschiedliche Reaktionspartner. Beim Einbringen eines Befestigungsmittels 4 werden die Mikrokapseln 3 zerstört und die Reaktionspartner treten aus. Dabei ergibt sich dann eine Reaktion und eine entsprechende Abdichtung 5, wie dies im Zusammenhang mit Fig. 8 beschrieben worden ist.

In Fig. 3 ist schematisch eine Mikrokapsel 3 dargestellt. Diese weist einen Kern 6 aus einem ersten Material und eine Schale 7 aus einem zweiten Material auf. Bei dem ersten Material kann es sich um Harz, bei dem zweiten Material um Härter handeln.

In Fig. 4 ist eine Ausführungsform dargestellt, bei der statt der Verwendung von Mikrokapseln feste Partikel 8 in das Matrixmaterial des Bahnkörpers 2 eingebettet sind. Bei den Partikeln 8 handelt es sich um ein vergleichsweise festes bzw. körniges Material. Da die Partikel 8 bei Zutritt von Luft und/oder Wasser reagieren, befinden sie sich nicht an den Außenseiten des Bahnkörpers 2, sondern im mittigen Bereich, so dass eine ungewollte Reaktion ausgeschlossen ist. Eine Reaktion erfolgt erst bei Perforation der Bahn 1.

In Fig. 5 ist eine alternative Ausführungsform dargestellt, bei der unterschiedliche Partikel 8 vorgesehen sind, die ebenfalls im mittigen Bereich des Matrixmaterials des Bahnkörpers 2 eingebettet sind. Die unterschiedlichsten Partikel sind hell und dunkel gekennzeichnet. Eine Reaktion der Partikel 8 unterschiedlichsten Materials erfolgt erst bei Luft- und/oder Wasserzutritt, was sich erst bei einer Perforation der Bahn 1 ergibt.

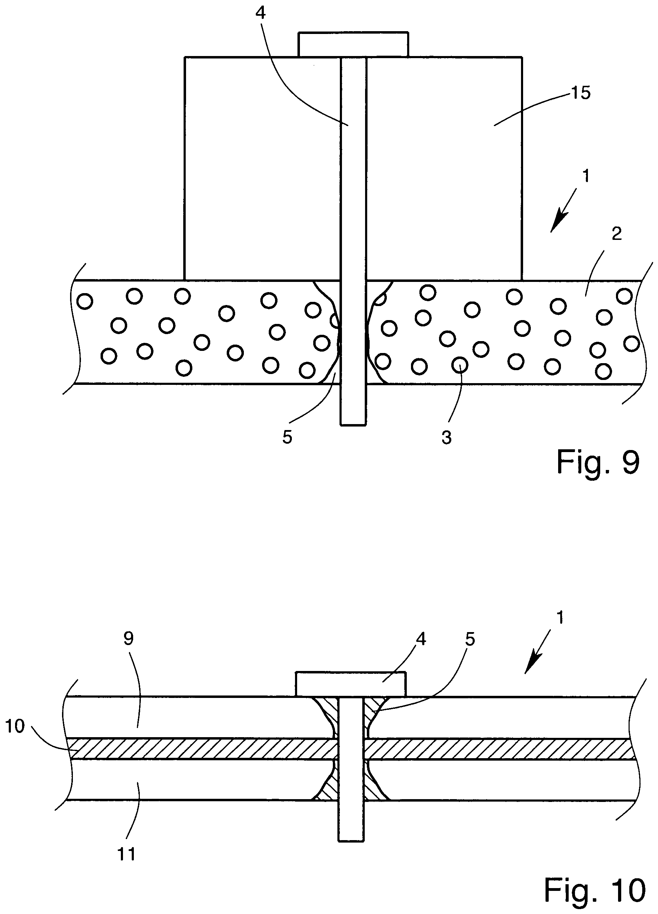

In Fig. 6 ist eine Ausführungsform dargestellt, bei der der Bahnkörper 2 schichtweise aufgebaut ist. Vorliegend sind drei Schichten vorgesehen, nämlich eine obere Schicht 9, eine Zwischenschicht 10 und eine untere Schicht 11. Das abdichtende/quellende Material befindet sich dabei in der innenliegenden Zwischenschicht 10. Die Zwischenschicht 10 kann eine Schichtdicke zwischen 0,1 bis 300 $\mu$m, vorzugsweise zwischen 1 und 100 $\mu$m und insbesondere zwischen 10 und 50 $\mu$m aufweisen. Bei Perforation der Bahn 1 durch ein Befestigungsmittel 4, wie dies in Fig. 10 dargestellt ist, tritt das Material der Zwischenschicht 10 im Bereich der Perforationsöffnung aus und füllt dabei den Bereich zwischen dem Befestigungsmittel 4 und dem umgebenden Matrixmaterial des Bahnkörpers 2 aus, so dass sich dort eine Abdichtung 5 ergibt, wie dies in Fig. 10 dargestellt ist.

In Fig. 7 ist eine Ausführungsform dargestellt, bei der der Bahnkörper 2 fünfschichtig ausgebildet ist. Dabei setzt die reaktive Zwischenschicht 10 aus zwei Reaktionsschichten 12, 13 und einer zwischen den Reaktionsschichten 12, 13 vorgesehenen und diese trennende Trennschicht 14 zusammen. Mit Perforation des Bahnkörpers 2 wird auch die Trennschicht 14 perforiert, so dass die Materialien der Reaktionsschichten 12, 13 miteinander reagieren und ihre Selbstdichtungs- bzw. Selbstheilungsfunktion im Bereich der Perforationsöffnung übernehmen können.

Fig. 9 zeigt eine Situation, wie sie im Dachbereich häufig auftritt. Auf die Bahn 1 ist ein Holz 15, beispielsweise eine Konterlatte, aufgelegt, die über ein Befestigungsmittel 4 mit dem Untergrund verbunden ist. Das Befestigungsmittel 4 geht dabei durch das Holz 15 und die Bahn 1. Dabei ergibt sich dann der bereits bei Fig. 8 beschriebene Effekt der Abdichtung 5 über das Material der bei der Perforation zerstörten Mikrokapseln 3, wobei die Abdichtung 5 zwischen dem Befestigungsmittel 4 und dem umgebenden Matrixmaterial des Bahnkörpers 2 sowie im Bereich des Holzes 15 erfolgt.

Bei allen Ausführungsformen ist es im Übrigen so, dass die Mikrokapseln 3 / Mikropartikel zumindest im Wesentlichen gleichmäßig über die Grundfläche des Bahnkörpers 2 verteilt sind. Randseitig sollte ein Zugang zu den Kapseln 3 / Partikeln bzw. ein Freiliegen nicht vorgesehen sein.

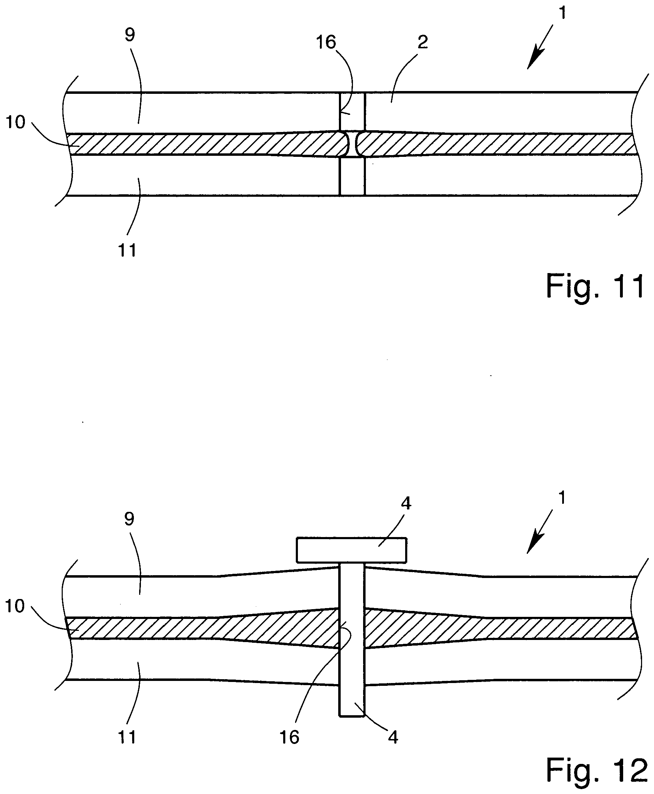

In Fig. 11 ist eine Ausführungsform einer Bahn 1 dargestellt, die eine Zwischenschicht 10 aus einem quellenden Material aufweist. Der Bahnkörper 2 ist perforiert, weist also eine Perforation 16 auf. Durch die Perforation 16 gelangt Luft und/oder Wasser an das aufquellende Material der Zwischenschicht 10, so dass dieses Material in die Perforation 16 hineinquillt und den freien Durchmesser der Perforation gegenüber dem Durchmesser in der oberen Schicht 9 bzw. der unteren Schicht 11 verringert. Das Quellen des Materials sorgt also für eine Querschnittsverengung der Perforation, die sogar soweit gehen kann, dass die Perforation 16 im Bereich der Zwischenschicht 10 vollständig geschlossen wird.

In Fig. 12 ist ein Ausführungsbeispiel dargestellt, bei dem sich das Befestigungsmittel 4 in der Perforation 16 befindet. Das Material der Zwischenschicht 10 ist im Bereich der Perforationsöffnung bzw. des Befestigungsmittels 4 aufgequollen und drückt gegen das den Bahnkörper 2 durchdringende Befestigungsmittel 4. Im Bereich der Perforation 16 ergibt sich aufgrund der Quellung des Materials in der Zwischenschicht 10 eine Verdickung der Zwischenschicht 10.

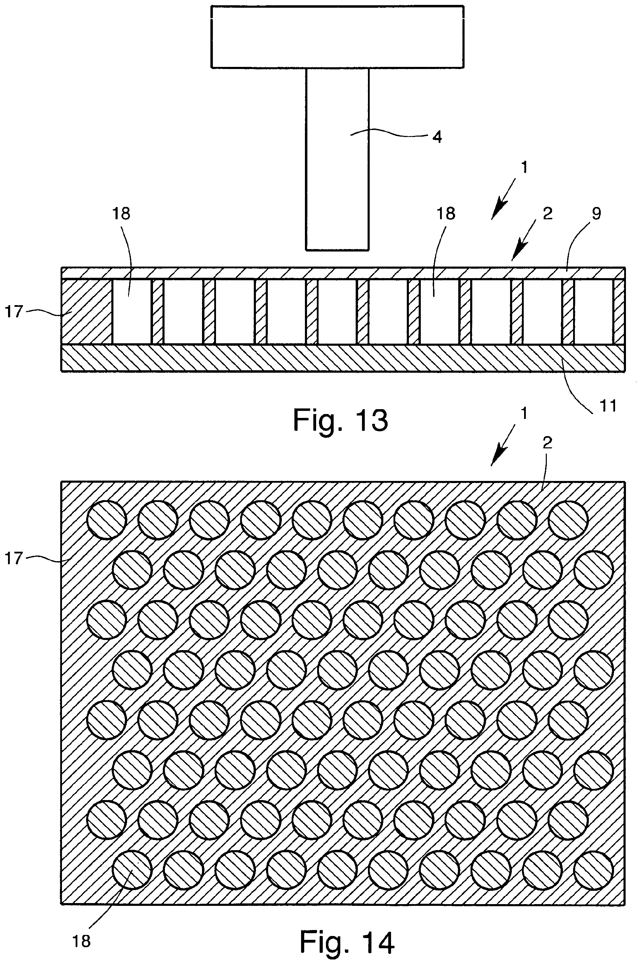

In den Fig. 13 und 14 ist eine weitere Ausführungsform der Bahn 1 dargestellt. Der Bahnkörper 2 weist vorliegend eine elastische Schicht als Dichtschicht 17 auf, die mit einer Vielzahl von Durchgangsöffnungen 18 versehen ist. Der Durchmesser der Durchgangsöffnungen 18 ist kleiner als der Durchmesser des Befestigungsmittels 4. Da die Durchgangsöffnungen 18 relativ großporig sind, weist der Bahnkörper 2 eine obere Schicht 9 auf, die diffusionsoffen ist aber auch diffusionsgeschlossen sein kann. Darüber hinaus ist eine untere Schicht 11 vorgesehen, bei der es sich beispielsweise um eine Vliesschicht handeln kann, die zur flächigen Formstabilität des Bahnkörpers 2 beiträgt.

Wird die Bahn 1 von dem Befestigungsmittel 4 durchdrungen, ergibt sich aufgrund der elastischen Eigenschaften des elastischen Schichtmaterials und der Verwendung von Durchgangsöffnungen 18, deren Durchmesser kleiner ist als der Durchmesser des Befestigungsmittels 4, eine abdichtende Anlage des elastischen Materials an das Befestigungsmittel 4.

Es versteht sich, dass es bei bestimmten Anwendungen grundsätzlich möglich ist, dass der Bahnkörper 2 bei Verwendung einer elastischen Schicht bzw. Dichtschicht 17 nur einschichtig ausgebildet sein kann, also lediglich die Dichtschicht 17 aufweist. Auch die Durchgangsöffnungen 18 können grundsätzlich entfallen. Bei diffusionsoffenen Anwendungen sollte die in Fig. 13 dargestellte Ausführungsform gewählt werden, wobei die untere Schicht 11 als Stabilitäts- oder Stützschicht nicht unbedingt erforderlich ist.

In Fig. 14 ist eine Ausführungsform einer Bahn 1 dargestellt, bei der der Bahnkörper 2 als Mehrschichtenverbund ausgebildet ist. Es ist eine obere Schicht 9 und eine untere Schicht 11 vorgesehen, die jeweils mechanische Schutzschichten bilden. Zwischen den beiden Schutzschichten 9, 11 befindet sich eine Dichtschicht 17 und eine Membranschicht 19.

Im Übrigen sind auch Bahnen möglich, bei denen sich ein anderer Aufbau des Folienverbundes ergibt.

So sind folgende, nicht dargestellte Ausführungsbeispiele von Bahnen und deren jeweiliger Herstellung möglich:

Folienverbund 1
Auf ein kalandriertes PP-Vlies mit einem Flächengewicht von 150 g/m$^2$ wird mittels Rakel ein Silikongel von 50 $\mu$m aufgetragen und mit einer TPE-E Folie von 90 $\mu$m Dicke kaschiert.

Folienverbund 2
Zwischen zwei Viskose-Vliese von jeweils 120 g/m$^2$ Flächengewicht wird ein TPE-U Film von 119 $\mu$m extrudiert.

Folienverbund 3
Eine lochperforierte EPDM-Folie (Lochdurchmesser 2 mm, offene Fläche 70%) wird mit einer TPE-E-Membran von 134 g/m$^2$ extrusionsbeschichtet. Anschließend wird auf die Membranseite mit einem thermokalandrierten PET-Vlies klebkschiert.

Folienverbund 4
Eine perforierte PP-Schaumfolien von 200 $\mu$m Dicke mit einer offenen Fläche von 47% wird mit einer TPE-E Membran von 91 $\mu$m extrusionsbeschichtet. Dieser Verbund wird beidseitig mit PP-Vliesen von jeweils 120 g/m$^2$ klebkaschiert.

Folienverbund 5
Auf ein PP-Vlies von 89 $\mu$m Dicke wird eine Mischung aus einem Klebstoff und superabsorbergefüllten Mikrokapseln aufgetragen und anschließend mittels einem zweiten PP-Vlies von 67 $\mu$m Dicke verklebt.

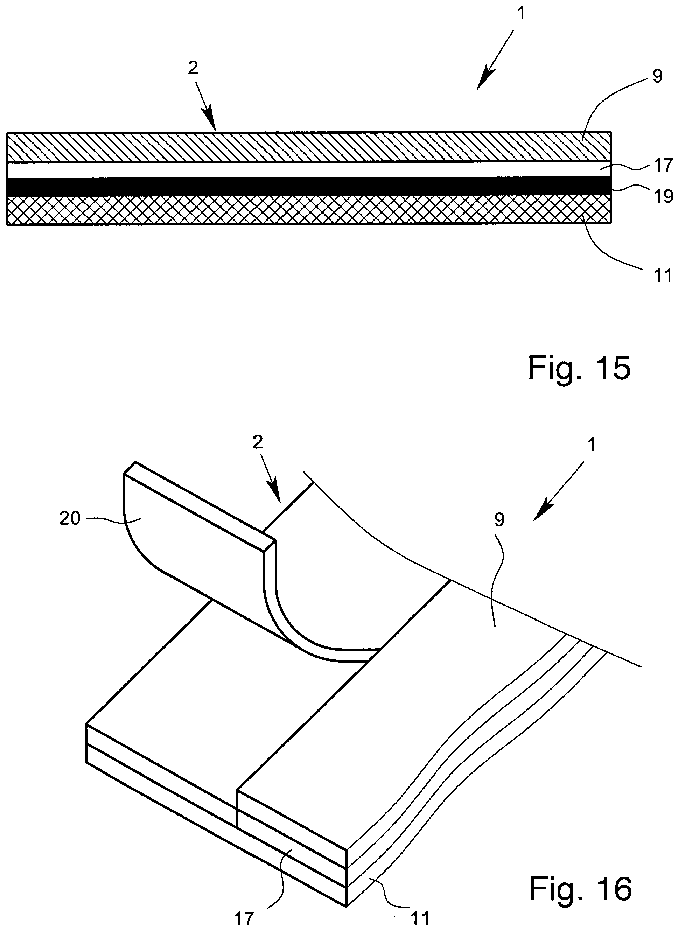

Fig. 16 stellt eine Ausführungsform dar, bei der die Dichtschicht 17 zwischen einer oberen Schicht 9 und einer unteren Schicht 11, die jeweils Trägerschichten bilden, angeordnet ist. Der dreilagige Schichtenverbund der Bahn 1 ist an zumindest einem Längsrand im Bereich der oberen Schicht 9 verkürzt. In gleicher Weise kann die untere Schicht am gegenüberliegenden Längsrand verkürzt sein. Die Dichtschicht 17 besteht aus einem viskoelastischen Gel, das selbstklebende Eigenschaften aufweist. Auf dem freiliegenden Randbereich der Gelschicht befindet sich eine abdeckende Schutzfolie 20, die zum Verlegen der Bahn abgezogen wird. Durch die selbstklebenden Eigenschaften der Gelschicht 17 ist eine Bahnverklebung mit einer benachbarten Bahn im Randbereich ohne weiteres möglich. Bei dieser Ausführungsform hat die Dichtschicht 17 eine Doppelfunktion, nämlich einerseits die abdichtende Wirkung im Falle einer Beschädigung/Perforation und im Übrigen die Verbindungsfunktion zur nächsten zu verlegenden Bahn.

**Bezugszeichenliste:**

| | |
|---|---|
| 1 | Bahn |
| 2 | Bahnkörper |
| 3 | Mikrokapsel |
| 4 | Befestigungsmittel |
| 5 | Abdichtung |
| 6 | Kern |
| 7 | Schale |
| 8 | Partikel |
| 9 | obere Schicht |
| 10 | Zwischenschicht |
| 11 | untere Schicht |
| 12 | Reaktionsschicht |
| 13 | Reaktionsschicht |
| 14 | Trennschicht |
| 15 | Holz |
| 16 | Perforation |
| 17 | Dichtschicht |
| 18 | Durchgangsöffnung |
| 19 | Membranschicht |
| 20 | Schutzfolie |

**Patentansprüche**

1. Bahn (1), vorzugsweise zur Verwendung im Baubereich und insbesondere zur Abdichtung der Gebäudehülle eines Gebäudes, mit einem flächigen Bahnkörper (2), wobei der Bahnkörper (2) als Mehrschichtenverbund neben einer Dichtschicht (17) wenigstens eine Membranschicht (19) und wenigstens eine weitere Schicht (9, 11) als Schutzschicht aufweist,

**dadurch gekennzeichnet,**
**dass** der Bahnkörper (2) wenigstens eine elastische Schicht als Dichtschicht (17) aus einem geschlossenzelligen oder offenzelligen elastischen Schaum solcher Elastizität und solcher Rückstellkraft aufweist, dass beim Durchstoßen der Dichtschicht (17) mit einem Befestigungsmittel (4) das das Befestigungsmittel (4) umgebende Material der Dichtschicht (17) das Befestigungsmittel (4) umschließt und im Bereich des Befestigungsmittels (4) derart abdichtet, dass die Bahn (1) nach Perforation mit dem Befestigungsmittel eine Wasserdichtigkeit bei einer statischen Wassersäule von größer 200 mm aufweist, wobei die Schichtdicke der Dichtschicht (17) zwischen 30 $\mu$m und 5000 $\mu$m und das Elastizitätmodul der Dichtschicht (17) zwischen 0,01 und 20 kN/mm$^2$ liegt, wobei die Dichtschicht (17) eine Polymerschaumschicht ist und wobei die Polymerschaumschicht aus einem wasserdampfdurchlässigen TPE-U oder TPE-E besteht, das mit chemischen oder physikalischen Treibmitteln aufschäumbar ist.

2. Bahn nach Anspruch 1, **dadurch gekennzeichnet, dass** die Dichtschicht eine Dichte zwischen 1 und 2200 kg/m$^3$, bevorzugt zwischen 5 und 500 kg/m$^3$, aufweist.

3. Bahn nach Anspruch 1 oder 2, **dadurch gekennzeichnet, dass** das Flächengewicht der Dichtschicht (17) zwischen 10 und 1000 g/m$^2$, bevorzugt zwischen 50 und 500 g/m$^2$, liegt.

4. Bahn nach einem der vorhergehenden Ansprüche, **dadurch gekennzeichnet, dass** das Elastizitätsmodul des Materials der Dichtschicht zwischen 0,05 und 1 kN/mm$^2$ liegt.

**Claims**

1. A sheet (1), preferably for use in the building sector and particularly for sealing of the shell of a building, with a planar sheet body (2), wherein the sheet body (2) as a multilayer composite has in addition to a sealing layer (17) at least one membrane layer (19) and at least one additional layer (9, 11) as a protective layer,
**characterized in**
**that** the sheet body (2) has at least one elastic layer as the sealing layer (17) of a closed-cell or open cell elastic foam having an elasticity and restoring force such that when the sealing layer (17) is penetrated by a fastener (4) the material of the sealing layer (17) surrounding the fastener (4) encompasses the fastener (4) and seals in the region of the fastener (4) in such a way that after penetration by the fastener (4) the sheet (1) has a watertightness for a static water column greater than 200 mm, wherein the layer thickness of the sealing layer (17) is between 30 $\mu$m and 5.000 $\mu$m and the modulus of elasticity of the material of the sealing layer (17) is between 0,01 and 20 kN/mm$^2$, wherein the sealing layer (17) is a polymer foam layer consisting of a water vapor-permeable TPE-U or TPE-E that is foamable by chemical or physical propellants.

2. Sheet according to claim 1, **characterized in that** the sealing layer (17) has a density between 1 and 2.200 kg/m$^3$, preferably between 5 and 500 kg/m$^3$.

3. Sheet according to claim 1 or 2, **characterized in that** the weight per unit area of the sealing layer (17) is between 10 and 1.000 g/m$^2$, preferably between 50 and 500 g/m$^2$.

4. Sheet according to one of the preceding claims, **characterized in that** the modulus of elasticity of the material of the sealing layer (17) is between 0,05 and 1 kN/mm$^2$.

**Revendications**

1. Bande (1), de préférence à utiliser dans le domaine de la construction et en particulier pour étanchéifier des enveloppes extérieures d'un bâtiment, comprenant un corps de bande plat (2), selon lequel le corps de bande (2) comme une composite multi-couche, présente en plus d'une couche d'étanchéité (17), au moins une couche de membrane (19) et au moins une autre couche (9, 11) comme une couche de protection,
**caractérisée en ce**
**que** le corps de bande (2) présente au moins une couche élastique comme une couche d'étanchéité (17) constituée d'une mousse élastique à cellules ouvertes ou closes qui présente une telle élasticité et une telle reprise élastique que, lorsque la couche d'étanchéité (17) est transpercée par un moyen de fixation (4), le matériau de la couche d'étanchéité (17) entourant le moyen de fixation (4) encercle le moyen de fixation (4) et étanchéifie dans la zone du moyen de fixation (4) de telle sorte que la bande (1), après la perforation par le moyen de fixation, présente une étanchéité à l'eau, en présence d'une colonne d'eau statique, supérieure à 200 mm, l'épaisseur de la couche d'étanchéité (17) étant comprise entre 30 $\mu$m et 5.000 $\mu$m et le module d'élasticité de la couche d'étanchéité (17) étant compris entre 0,01 et 20 kN/mm$^2$, la couche d'étanchéité (17) étant une couche de mousse polymère et la couche de mousse polymère étant constituée d'un TPE-U ou TPE-E perméable à la vapeur d'eau, expansible à l'aide d'agents gonflants chimiques ou physiques.

2. Bande selon la revendication 1, **caractérisée en ce**

**que** la couche d'étanchéité présente une épaisseur comprise entre 1 et 2.200 kg/m$^3$, de préférence entre 5 et 500 kg/m$^3$.

3. Bande selon la revendication 1 ou 2, **caractérisée en ce que** le grammage de la couche d'étanchéité (17) est comprise entre 10 et 1.000 g/m$^2$, de préférence entre 50 et 500 g/m$^2$.

4. Bande selon l'une des revendications précédentes, **caractérisée en ce que** le module d'élasticité du matériau de la couche d'étanchéité est compris entre 0,05 et 1 kN/mm$^2$.

Fig. 1

Fig. 2

Fig. 3

Fig. 4

Fig. 5

**Fig. 6**

**Fig. 7**

**Fig. 8**

Fig. 9

Fig. 10

Fig. 11

Fig. 12

Fig. 13

Fig. 14

Fig. 15

Fig. 16

**EP 2 556 198 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2934350 A1

- EP 0183266 A2